# EUROPEAN PATENT APPLICATION

(11) **EP 3 926 571 A1**
(43) Date of publication of application: **22.12.2021**
(21) Application number: 20756654.8
(22) Date of filing: 07.02.2020
(51) Int. Cl.: G06Q 40/02, G07D 1/00, G07D 11/20, G07D 11/32

(54) **TRANSACTION PROCESSING SYSTEM AND TRANSACTION PROCESSING METHOD**

(30) Priority: 15.02.2019 JP 2019025964
(71) Applicant: GLORY LTD., Himeji-shi Hyogo 670-8567 (JP)
(72) Inventor: KUNIMITSU, Masahito, Hyogo 670-8567 (JP)
(74) Representative: SSM Sandmair
(86) International application number: PCT/JP2020/004832
(87) International publication number: WO 2020/166508

(57) **Abstract**

In order to make a transaction related to money smoother in a branch of a financial institution, a slip handling apparatus 20 receives a content of the transaction, issues a slip, and registers a transaction ID, a transaction type, and a monetary amount in a transaction management apparatus 10. The transaction management apparatus 10 manages a handling status of the registered transaction. Each of the money handling apparatus 30 and the teller terminal apparatus 40 reads the transaction ID from the slip, refers to the handling status managed by the transaction management apparatus 10, determines appropriateness of an operation for the slip, performs handling corresponding to the operation determined to be appropriate, and updates the handling status.

## Description

### TECHNICAL FIELD

The present invention relates to a transaction processing system and a transaction processing method for performing a transaction at a branch of a financial institution.

### BACKGROUND ART

Conventionally, in a branch of a financial institution, a user fills in a transaction content on a slip, and a teller who is working at a teller window performs a transaction such as depositing and/or dispensing of money based on the content filled in the slip. These transactions are performed by using apparatuses such as a teller terminal apparatus used by the teller of the financial institution and a cash handling apparatus for depositing and dispensing money. In addition to these apparatuses, a slip handling apparatus, which reduces the user's burden by allowing the user to electronically input the transaction content in the slip, has been known as described in Patent Literature 1, for example.

### CITATION LIST

### [PATENT LITERATURE]

[PTL 1] Japanese Laid-Open Patent Publication No. H7-98740

### SUMMARY OF THE INVENTION

### PROBLEMS TO BE SOLVED BY THE INVENTION

However, in the conventional art, there is a problem that the operation becomes complicated since a plurality of apparatuses are used for one transaction. A user needs to perform operations for each apparatus, and each apparatus independently performs handlings. Furthermore, there is a problem that the order of the apparatuses to be used differs depending on a kind of the transaction and it causes confusion for the user.

For example, if the user desires a depositing transaction, input of a transaction content and printing of a deposit slip are performed by using the slip handling apparatus, then cash is deposited by using the money handling apparatus, and then the balance on a user's account is updated through addition of the amount of deposited money thereto by using the teller terminal apparatus. On the other hand, if the user desires a dispensing transaction, input of a transaction content and printing of a dispensing slip are performed by using the slip handling apparatus, then the balance on the user's account is updated through subtraction of the amount of money to be dispensed therefrom by using the teller terminal apparatus, and then cash is dispensed from the money handling apparatus.

If the plurality of apparatuses involved in transactions are connected to each other and data required for a transaction are transmitted and received therebetween, the user's burden for operations can be greatly reduced and handlings can be performed smoothly. However, each apparatus is individually developed and introduced for transactions and therefore, it is difficult to integrate interfaces of these apparatuses.

For these reasons, how to support user's operations and make handling smoother has become an important issue for a transaction performed in a branch of a financial institution.

The present invention has been made to solve the above problem of the conventional art, and one object of the present invention is to make a transaction in a branch of a financial institution smoother.

### SOLUTION TO THE PROBLEMS

In order to solve the above-described problem and achieve the object, the present invention provides a transaction processing system for performing a transaction in a branch of a financial institution. The transaction processing system includes: a reception apparatus configured to receive a content of the transaction; a management unit configured to manage the content and a handling status of the transaction received by the reception apparatus; a determination unit configured to, when an operation related to the received transaction is performed, refer to the handling status managed by the management unit and determine appropriateness of the operation; and a handling unit configured to perform handling corresponding to the operation determined to be appropriate by the determination unit, and update the handling status.

According to the present invention, in the above invention, the determination unit and the handling unit are provided in each of a money handling apparatus configured to perform at least one of depositing of money and dispensing of money and a terminal apparatus configured to update a balance on an account, and the management unit is provided in a management apparatus accessible from the reception apparatus, the money handling apparatus, and the terminal apparatus.

According to the present invention, in the above invention, the reception apparatus is a slip handling apparatus configured to generate slip information indicating the content of the transaction. The slip handling apparatus outputs a slip having the slip information printed thereon, and the money handling apparatus and the terminal apparatus acquire the slip information printed on the slip.

According to the present invention, in the above invention, the reception apparatus is a check handling apparatus configured to read information on a check and generate check information indicating the content of the transaction related to the check. The check handling apparatus outputs the check information, and the money handling apparatus and the terminal apparatus acquire the check information.

According to the present invention, in the above invention, the reception apparatus registers, in the management unit, a transaction type and a monetary amount in the content of the received transaction. The management unit associates the transaction type and the monetary amount with each other and manages whether or not cash handling has been performed and whether or not update handling of a balance on an account has been performed.

According to the present invention, in the above invention, the determination unit determines whether or not an order of the cash handling and the update handling is appropriate, based on the transaction type.

According to the present invention, in the above invention, when the transaction type is a depositing transaction, if the cash handling is unfinished, the determination unit determines that cash handling of depositing of money equivalent to the monetary amount is appropriate, and if the cash handling has been finished and the update handling is unfinished, the determination unit determines that update handling of addition to the balance on the account is appropriate.

According to the present invention, in the above invention, when the transaction type is a dispensing transaction, if the update handling is unfinished, the determination unit determines that update handling of subtraction from the balance on the account is appropriate, and if the update handling has been finished and the cash handling is unfinished, the determination unit determines that cash handling of dispensing of money equivalent to the monetary amount is appropriate.

The present invention also provides a transaction processing method for performing a transaction in a branch of a financial institution. The transaction processing method includes: receiving a content of the transaction; managing the content and a handling status of the transaction received in the receiving; determining, when an operation related to the received transaction is performed, appropriateness of the operation by referring to the handling status managed in the managing; and executing handling corresponding to the operation determined to be appropriate in the determining, and update the handling status.

### ADVANTAGEOUS EFFECTS OF THE INVENTION

According to the present invention, a transaction can be performed smoothly in a branch of the financial institution.

### BRIEF DESCRIPTION OF THE DRAWINGS

[FIG. 1] FIG. 1 illustrates a concept of a money handling system according to an embodiment.
[FIG. 2] FIG. 2 is a system configuration diagram showing the configuration of the money handling system.
[FIG. 3] FIG. 3 is a functional block diagram showing the functional configuration of a transaction management apparatus shown in FIG. 1.
[FIG. 4] FIG. 4 is a functional block diagram showing the functional configuration of a slip handling apparatus shown in FIG. 1.
[FIG. 5] FIG. 5 is a functional block diagram showing the functional configuration of a money handling apparatus shown in FIG. 1.
[FIG. 6] FIG. 6 is a functional block diagram showing the functional configuration of a teller terminal apparatus shown in FIG. 1.
[FIG. 7] FIG. 7 illustrates operation of the money handling system.
[FIG. 8] FIG. 8 is a flowchart showing a procedure of handling by the slip handling apparatus.
[FIG. 9] FIG. 9 is a flowchart showing a procedure of handling by the money handling apparatus.
[FIG. 10] FIG. 10 is a flowchart showing a procedure of handling by the teller terminal apparatus.
[FIGS. 11A and 11B] FIGS. 11A and 11B illustrate specific examples of guidance outputted in handling shown in FIG. 9 and FIG. 10.
[FIGS. 12A and 12B] FIGS. 12A and 12B illustrate modifications of a system configuration.

### DESCRIPTION OF EMBODIMENTS

### EMBODIMENTS

Hereinafter, a money handling system and a money handling method according to an embodiment will be described with reference to the accompanying drawings. The money handling system is an example of the transaction processing system, and the money handling method is an example of the transaction processing method.

### <Concept of money handling system according to present embodiment>

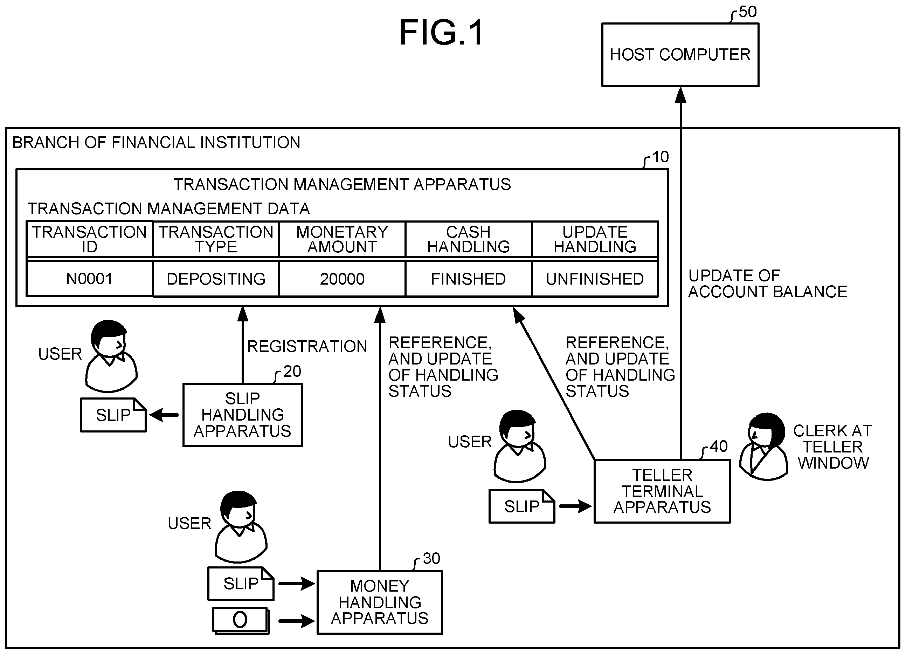

FIG. 1 illustrates a concept of the money handling system according to the present embodiment. The money handling system shown in FIG. 1 includes a transaction management apparatus 10, a reception apparatus, a money handling apparatus 30, and a teller terminal apparatus 40 that are disposed in a branch of a financial institution. The reception apparatus may be any apparatus configured to receive information for a transaction desired by a user who visits the branch of the financial institution. The money handling system of the present embodiment includes a slip handling apparatus 20 as the reception apparatus.

A user who visits the branch of the financial institution first operates the slip handling apparatus 20 to input, as a transaction content, a content of a desired transaction. The slip handling apparatus 20 assigns a transaction ID to the inputted transaction content. The slip handling apparatus 20 stores therein the transaction content and the transaction ID such that the transaction content and the transaction ID are associated with each other. The transaction content includes various kinds of information required for the transaction, such as a transaction type, a monetary amount, the user's name, and an account number required for the transaction.

The slip handling apparatus 20 encodes the transaction ID into a code and issues a slip on which the code and the transaction content are printed. The code is, for example, a one-dimensional code such as a barcode or a two-dimensional code such as a QR code (registered trademark). In addition, the slip handling apparatus 20 transmits the transaction ID, the transaction type, and the monetary amount, to the transaction management apparatus 10 to register these data therein. In the transaction management apparatus 10, the transaction ID, the transaction type, and the monetary amount are registered as transaction management data.

In FIG. 1, the user desires a depositing transaction of 20,000 JPY, and a transaction ID "N0001" is assigned to this depositing transaction. Therefore, the transaction management apparatus 10 manages the transaction ID "N0001" such that a transaction type "deposit" and a monetary amount "20,000" are associated with the transaction ID "N0001". In the transaction management data, the handling statuses of cash handling and update handling are associated with this depositing transaction. The cash handling is handling of cash performed by using the money handling apparatus 30 according to the content of the transaction. The cash handling includes depositing of cash and dispensing of cash. The update handling is handling of updating the balance on a user's account based on the content of the transaction. The handling statuses of the cash handling and the update handling are "unfinished" at the time of registration by the slip handling apparatus 20, and are changed to "finished" when each handling is completed.

After issuing the slip, the slip handling apparatus 20 guides the user to the next operation to be performed. Specifically, when the slip handling apparatus 20 issues a slip for a depositing transaction, the slip handling apparatus 20 guides the user to deposit cash into the money handling apparatus 30. When the slip handling apparatus 20 issues a slip for a dispensing transaction, the slip handling apparatus 20 guides the user to perform update of the balance on the account by the teller terminal apparatus 40.

The money handling apparatus 30 receives the slip and reads the code on the slip. The money handling apparatus 30 acquires the transaction ID by decoding the code and refers to the data associated with the transaction ID in the transaction management data. If the transaction type is "depositing", the money handling apparatus 30 accepts the depositing of cash on condition that the cash handling is "unfinished". After the cash, whose amount is the monetary amount specified by the transaction management data, is deposited in the money handling apparatus 30, the money handling apparatus 30 updates the status of the cash handling in the transaction management data to "finished".

The teller terminal apparatus 40 is installed at a teller counter in the branch of the financial institution. The teller terminal apparatus 40 is operated by a teller who is working at a teller window of the teller counter. The teller terminal apparatus 40 receives the slip and reads the code on the slip. The teller terminal apparatus 40 acquires the transaction ID by decoding the code and refers to the data associated with the transaction ID in the transaction management data. If the transaction type is "depositing", the teller terminal apparatus 40 updates the balance on the user's account on condition that the status of the cash handling is "finished" and the status of the update handling is "unfinished". Specifically, the balance on the account is updated by accessing a host computer 50 that manages the account, and adding the monetary amount specified in the slip to the balance on the account specified in the slip.

As described above, the slip handling apparatus 20 receives the content of the transaction and registers the content of the transaction in the transaction management apparatus 10. The transaction management apparatus 10 manages the handling status of the registered transaction. When the money handling apparatus 30 and the teller terminal apparatus 40 receive the slip, these apparatuses determine whether an operation for the slip is appropriate or not by referring to the handling status managed by the transaction management apparatus 10. Each of the money handling apparatus 30 and the teller terminal apparatus 40 performs handling corresponding to the operation determined to be appropriate, and updates the status of the handling.

Therefore, when a plurality of apparatuses are involved in a transaction desired by the user, it is possible to support an appropriate operation on each apparatus and make the handling smoother.

### <Configurations of system and apparatuses>

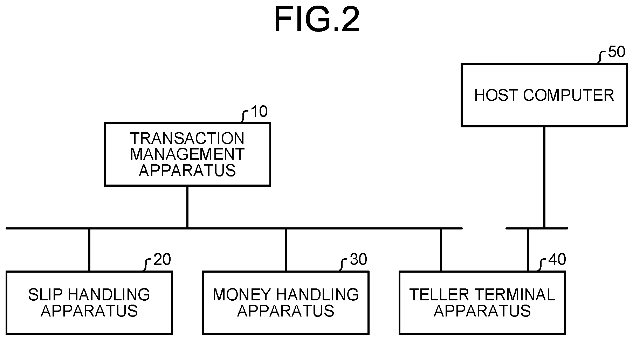

Next, the configuration of the money handling system will be described. FIG. 2 is a system configuration diagram showing the configuration of the money handling system. As shown in FIG. 2, the teller terminal apparatus 40 is connected to two networks.

One of the networks is a branch network used in the branch. The transaction management apparatus 10, the slip handling apparatus 20, and the money handling apparatus 30 are connected to the branch network. The other network is an account management network for connecting a plurality of branches of the same bank. The host computer 50 is connected to the account management network. An apparatus capable of updating the balance on a user's account, such as an automated teller machine (ATM) not shown in FIG. 2, may be connected to the account management network.

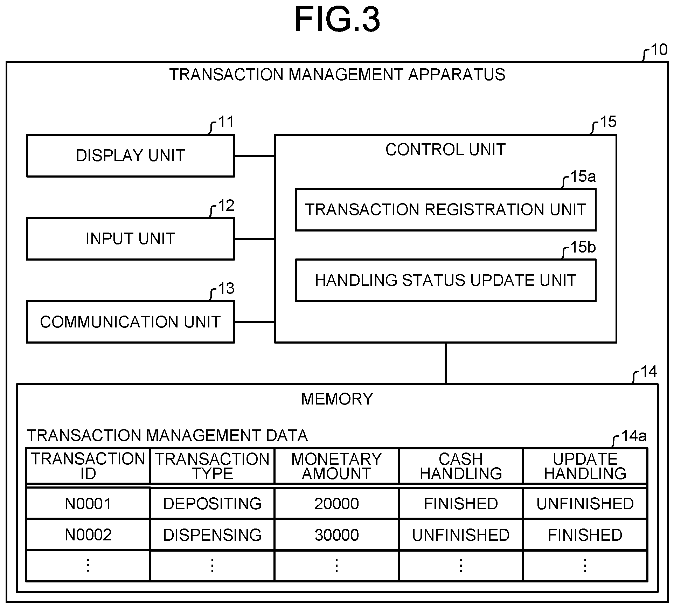

FIG. 3 is a functional block diagram showing the functional configuration of the transaction management apparatus 10 shown in FIG. 1. As shown in FIG. 3, the transaction management apparatus 10 includes a display unit 11, an input unit 12, a communication unit 13, a memory 14, and a control unit 15.

The display unit 11 is a display device such as a liquid crystal display. The input unit 12 is an input device such as a keyboard and a mouse. The communication unit 13 is a communication interface to communicate with the slip handling apparatus 20, the money handling apparatus 30, and the teller terminal apparatus 40.

The memory 14 is a memory device such as a hard disk drive, and stores therein transaction management data 14a. In the transaction management data 14a, a transaction type indicating the type of a transaction, a monetary amount of the transaction, a handling status, etc., are associated with a transaction ID that uniquely identifies each transaction. The handling status indicates whether cash handling and account update handling are unfinished or have been finished. FIG. 3 shows an example in which "unfinished" indicates that the handling is unfinished, and "finished" indicates that the handling has been finished, but whether or not the handling has been finished can be managed by any method. For example, the handling status may be managed by using data flags.

FIG. 3 shows an example in which a transaction type "depositing", a monetary amount "20,000", cash handling "finished", and update handling "unfinished" are associated with a transaction ID "N0001". FIG. 3 also shows another example in which a transaction type "dispensing", a monetary amount "30,000", cash handling "unfinished", and update handling "finished" are associated with a transaction ID "N0002".

The control unit 15 controls the entirety of the transaction management apparatus 10. The control unit 15 includes a transaction registration unit 15a and a handling status update unit 15b. In actuality, programs corresponding to these functional units are stored in a ROM or a non-volatile memory which are not shown in FIG. 3, and these programs are loaded into a CPU (Central Processing Unit) and executed, thereby causing the CPU to execute processes corresponding to the transaction registration unit 15a and the handling status update unit 15b, respectively.

The transaction registration unit 15a receives a transaction ID, a transaction type, and a monetary amount from the slip handling apparatus 20. The transaction registration unit 15a registers these data in the transaction management data 14a. The transaction registration unit 15a sets handling statuses of the cash handling and the update handling, which are associated with the registered data, as "unfinished" that is the initial status.

The handling status update unit 15b receives a reference request, in which a transaction ID is specified, from the money handling apparatus 30 and the teller terminal apparatus 40. The handling status update unit 15b responds to the reference request by transmitting the transaction type, the monetary amount, and the handling status that are associated with the received transaction ID. When the handling status update unit 15b receives a registration request, in which a transaction ID of the finished cash handling is specified, from the money handling apparatus 30, the handling status update unit 15b updates the status of the cash handling of the received transaction ID to "finished". Similarly, when the handling status update unit 15b receives a registration request, in which a transaction ID of the finished update handling is specified, from the teller terminal apparatus 40, the handling status update unit 15b updates the status of the update handling of the received transaction ID to "finished".

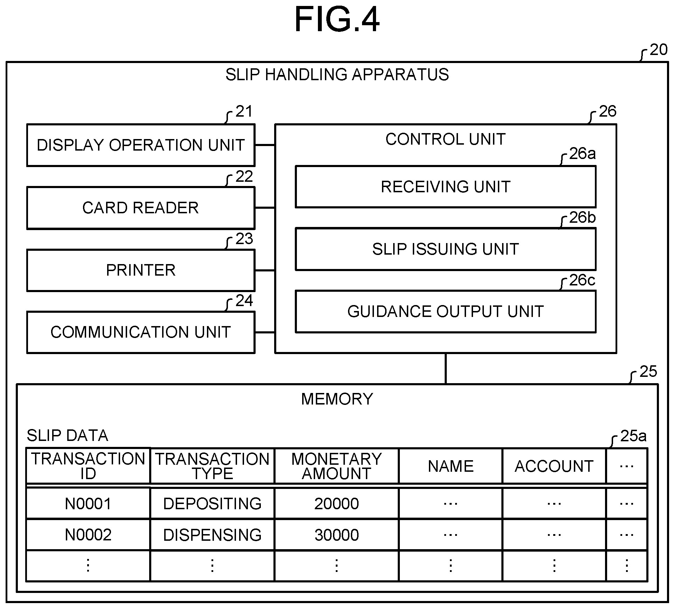

FIG. 4 is a functional block diagram showing the functional configuration of the slip handling apparatus 20 shown in FIG. 1. As shown in FIG. 4, the slip handling apparatus 20 includes a display operation unit 21, a card reader 22, a printer 23, a communication unit 24, a memory 25, and a control unit 26.

The display operation unit 21 is a liquid crystal touch panel display or the like. The display operation unit 21 is used for inputting transaction contents, outputting guidance, and the like. The card reader 22 can receive a user's cash card and read a card ID. The printer 23 is used for printing a slip. The communication unit 24 is a communication interface to communicate with the transaction management apparatus 10.

The memory 25 is a memory device such as a hard disk drive, and stores therein slip data 25a, etc. In the slip data 25a, a transaction content is associated with a transaction ID. The transaction content includes various kinds of information required for the transaction, such as a transaction type, a monetary amount, a user's name, and an account number required for the transaction.

FIG. 4 shows an example in which a transaction type "deposit", a monetary amount "20,000", etc., are associated with the transaction ID "N0001". FIG. 4 also shows another example in which a transaction type "dispensing", a monetary amount "30,000", etc., are associated with the transaction ID "N0002".

The control unit 26 controls the entirety of the slip handling apparatus 20. The control unit 26 includes a receiving unit 26a, a slip issuing unit 26b, and a guidance output unit 26c. In actuality, programs corresponding to these functional units are stored in a ROM or a non-volatile memory which are not shown in FIG. 4, and these programs are loaded into a CPU and executed, thereby causing the CPU to execute processes corresponding to the receiving unit 26a, the slip issuing unit 26b, and the guidance output unit 26c, respectively.

When the user operates the display operation unit 21 to input a transaction content, the receiving unit 26a assigns a transaction ID to the inputted transaction content. The receiving unit 26a adds the transaction content and the transaction ID to the slip data 25a such that the transaction content and the transaction ID are associated with each other. The transaction content includes various kinds of information required for the transaction, such as a transaction type, a monetary amount, the user's name, and an account number required for the transaction. When the card reader 22 reads a card ID from a cash card, information such as the name associated with the card ID of the cash card may be specified and used as the transaction content.

The receiving unit 26a transmits the transaction ID, the transaction type, and the monetary amount to the transaction management apparatus 10 to register these data therein. In the transaction management apparatus 10, the transaction ID, the transaction type, and the monetary amount are registered in the transaction management data 14a.

The slip issuing unit 26b issues a slip by controlling the printer 23 to print the slip. Specifically, the slip issuing unit 26b encodes the transaction ID into a code, and controls the printer 23 to print the code and the transaction content on the slip.

The guidance output unit 26c guides the user to the next operation to be performed. Specifically, when the slip issuing unit 26b issues a slip for a depositing transaction, the guidance output unit 26c guides the user to deposit cash into the money handling apparatus 30. When the slip issuing unit 26b issues a slip for a dispensing transaction, the guidance output unit 26c guides the user to perform update of the balance on the account by the teller terminal apparatus 40.

The guidance output unit 26c can perform guidance by display output of the display operation unit 21. For example, the guidance output unit 26c displays a message such as "Please come to window x" or "Please deposit money with money handling apparatus", a map showing the location of the teller window or the money handling apparatus 30, etc., on the display operation unit 21. The guidance output unit 26c can also perform guidance by another method. For example, content of the guidance may be printed on the slip.

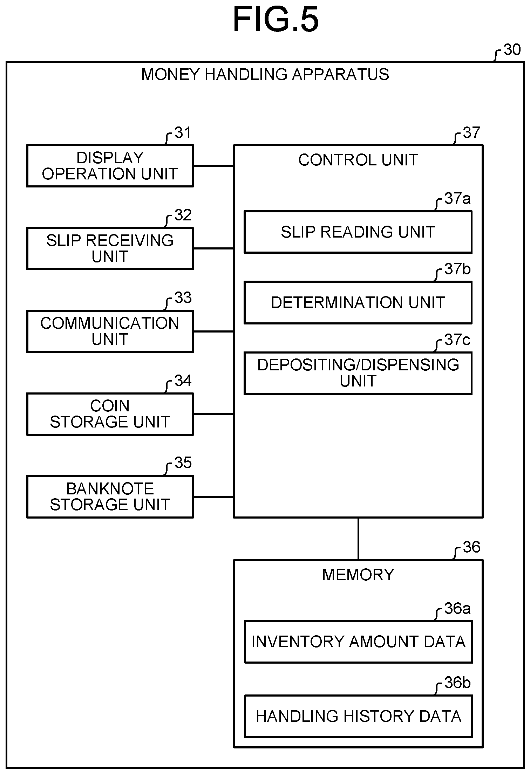

FIG. 5 is a functional block diagram showing the functional configuration of the money handling apparatus 30 shown in FIG. 1. As shown in FIG. 5, the money handling apparatus 30 includes a display operation unit 31, a slip receiving unit 32, a communication unit 33, a coin storage unit 34, a banknote storage unit 35, a memory 36, and a control unit 37.

The display operation unit 31 is a liquid crystal touch panel display or the like. The display operation unit 31 is used for inputting and displaying various kinds of information for operations. The slip receiving unit 32 receives the slip issued by the slip handling apparatus 20 and captures an image of the code on the slip. The communication unit 33 is a communication interface to communicate with the transaction management apparatus 10.

The coin storage unit 34 stores therein coins for each denomination and performs depositing and dispensing of coins. The banknote storage unit 35 stores therein banknotes for each denomination and performs depositing and dispensing of banknotes.

The memory 36 is a memory device such as a hard disk drive, and stores therein inventory amount data 36a and handling history data 36b. The inventory amount data 36a is data indicating the inventory amount of money for each denomination stored in each of the coin storage unit 34 and the banknote storage unit 35. The handling history data 36b is data indicating the history of money handling such as depositing and dispensing.

The control unit 37 controls the entirety of the money handling apparatus 30. The control unit 37 includes a slip reading unit 37a, a determination unit 37b, and a depositing/dispensing unit 37c. The depositing/dispensing unit 37c is an example of a handling unit that performs handling corresponding to an operation determined to be appropriate by the determination unit 37b and updates the handling status of the handling. In actuality, programs corresponding to these functional units are stored in a ROM or a non-volatile memory which are not shown in FIG. 5, and these programs are loaded into a CPU and executed, thereby causing the CPU to execute processes corresponding to the slip reading unit 37a, the determination unit 37b, and the depositing/dispensing unit 37c, respectively.

The slip reading unit 37a reads the slip received by the slip receiving unit 32. Specifically, the slip reading unit 37a decodes the code in an image captured by the slip receiving unit 32 to acquire the transaction ID. The slip reading unit 37a transmits a reference request, in which the transaction ID is specified, to the transaction management apparatus 10, and receives the transaction type, the monetary amount, and the handling status as a response from the transaction management apparatus 10.

The determination unit 37b determines whether or not an operation for the slip received by the slip receiving unit 32 is appropriate, based on the transaction type, the monetary amount, and the handling status. Specifically, if the transaction type is "depositing", the determination unit 37b determines that the operation is appropriate, on condition that the status of the cash handling is "unfinished". If the transaction type is "dispensing", the determination unit 37b determines that operation is appropriate, on condition that the status of the cash handling is "unfinished" and the status of the update handling is "finished". If the determination unit 37b determines that the operation is not appropriate, the determination unit 37b notifies the user that the operation is not appropriate at a proper timing.

The depositing/dispensing unit 37c performs depositing and/or dispensing of money related to the slip, on condition that the determination unit 37b determined that the operation is appropriate. Specifically, if the transaction type is "depositing", the depositing/dispensing unit 37c accepts the insertion of money. When money equal to or more than the monetary amount of the transaction is inserted, the depositing/dispensing unit 37c transmits a registration request, which includes the transaction ID of the finished cash handling, to the transaction management apparatus 10. If the monetary amount of the inserted money exceeds the monetary amount of the transaction, the depositing/dispensing unit 37c returns the excess amount as change. If the transaction type is "dispensing", the depositing/dispensing unit 37c dispenses money equivalent to the monetary amount of the transaction, and transmits a registration request, which includes the transaction ID of the finished cash handling, to the transaction management apparatus 10.

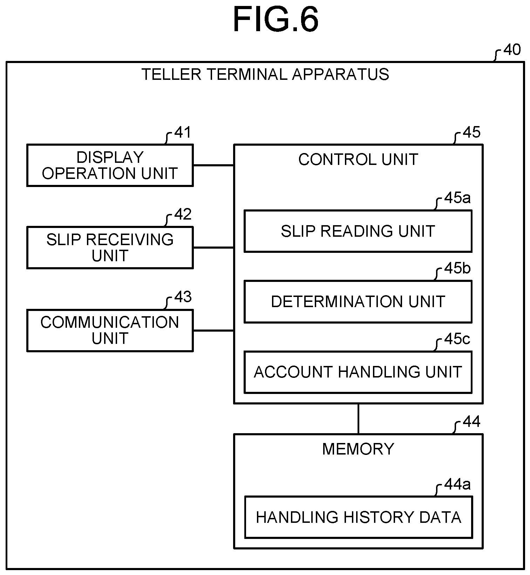

FIG. 6 is a functional block diagram showing the functional configuration of the teller terminal apparatus 40 shown in FIG. 1. As shown in FIG. 6, the teller terminal apparatus 40 includes a display operation unit 41, a slip receiving unit 42, a communication unit 43, a memory 44, and a control unit 45.

The display operation unit 41 is a liquid crystal touch panel display or the like. The display operation unit 41 is used for inputting and displaying various kinds of information for operations. The slip receiving unit 42 receives the slip issued by the slip handling apparatus 20 and captures an image of the code on the slip. The communication unit 43 is a communication interface to communicate with the transaction management apparatus 10 and the host computer 50.

The memory 44 is a memory device such as a hard disk drive, and stores therein handling history data 44a. The handling history data 44a is data indicating the history of handling such as update of the balance on an account.

The control unit 45 controls the entirety of the teller terminal apparatus 40. The control unit 45 includes a slip reading unit 45a, a determination unit 45b, and an account handling unit 45c. The account handling unit 45c is an example of a handling unit that performs handling corresponding to an operation determined to be appropriate by the determination unit 45b and updates the handling status of the handling. In actuality, programs corresponding to these functional units are stored in a ROM or a non-volatile memory which are not shown in FIG. 6, and these programs are loaded into a CPU and executed, thereby causing the CPU to execute processes corresponding to the slip reading unit 45a, the determination unit 45b, and the account handling unit 45c, respectively.

The slip reading unit 45a reads the slip received by the slip receiving unit 42. Specifically, the slip reading unit 45a decodes the code in an image captured by the slip receiving unit 42 to acquire the transaction ID. The slip reading unit 45a transmits a reference request, in which the transaction ID is specified, to the transaction management apparatus 10, and receives the transaction type, the monetary amount, and the handling status as a response from the transaction management apparatus 10.

The determination unit 45b determines whether or not an operation for the slip received by the slip receiving unit 42 is appropriate, based on the transaction type, the monetary amount, and the handling status. Specifically, if the transaction type is "dispensing", the determination unit 45b determines that the operation is appropriate, on condition that the status of the update handling is "unfinished". If the transaction type is "depositing", the determination unit 45b determines that the operation is appropriate, on condition that the status of the cash handling is "finished" and the status of the update handling is "unfinished". If the determination unit 45b determines that the operation is not appropriate, the determination unit 45b notifies the user that the operation is not appropriate, at a proper timing.

The account handling unit 45c updates the balance on the account specified by the slip, on condition that the determination unit 45b determined that the operation for the slip is appropriate. Specifically, if the transaction type is "depositing", the account handling unit 45c accesses the host computer 50 and adds the monetary amount specified by the slip to the balance on the account specified by the slip. Then, the account handling unit 45c transmits a registration request, which includes the transaction ID of the finished update handling, to the transaction management apparatus 10. If the transaction type is "dispensing", the account handling unit 45c accesses the host computer 50 and subtracts the monetary amount specified by the slip from the balance on the account specified by the slip. Then, the account handling unit 45c transmits a registration request, which includes the transaction ID of the finished update handling, to the transaction management apparatus 10.

### <Operation of system>

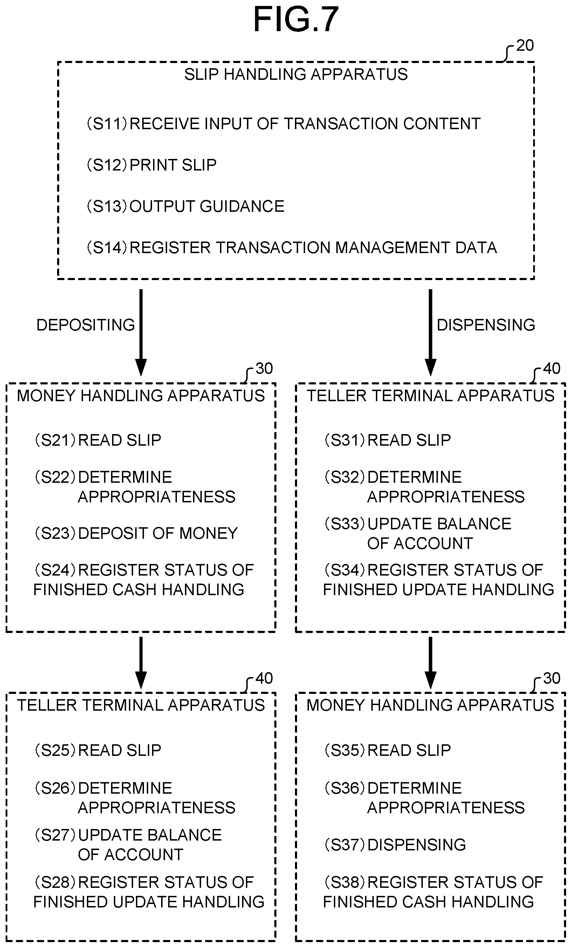

FIG. 7 illustrates operation of the money handling system. First, when a transaction content is inputted to the slip handling apparatus 20 (S11), the slip handling apparatus 20 prints a slip (S12). The slip handling apparatus 20 outputs a guidance (S13), and registers data in the transaction management data 14a (S14).

If the transaction type is depositing, after a slip is issued by the slip handling apparatus 20, the money handling apparatus 30 reads the slip (S21) and determines whether or not an operation started for the slip is appropriate (S22). If the status of the cash handling is "unfinished", the money handling apparatus 30 determines that the operation is appropriate, performs depositing of money (S23), and performs a process for registering the data by which the status of the cash handling is updated to indicate that the cash handling is finished (S24).

Thereafter, the teller terminal apparatus 40 reads the slip (S25) and determines whether or not an operation started for the slip is appropriate (S26). If the status of the cash handling is "finished" and the status of the update handling is "unfinished", the teller terminal apparatus 40 determines that the operation is appropriate, updates the balance on the account (27), performs a process for registering the data by which the status of the update handling is updated to indicate that the update handling is finished (S28), and completes the depositing transaction.

If the transaction type is dispensing, after a slip is issued by the slip handling apparatus 20, the teller terminal apparatus 40 reads the slip (S31) and determines whether or not an operation started for the slip is appropriate (S32). If the status of the update handling is "unfinished", the teller terminal apparatus 40 determines that the operation is appropriate, updates the balance on the account (S33), and performs a process for registering the data by which the status of the update handling is updated to indicate that the update handling is finished (S34).

Thereafter, the money handling apparatus 30 reads the slip (S35) and determines whether or not an operation started for the slip is appropriate (S36). If the status of the cash handling is "unfinished" and the status of the update handling is "finished", the money handling apparatus 30 determines that the operation is appropriate, performs dispensing of money equivalent to the monetary amount specified by the slip (S37), performs a process for registering the data by which the status of the cash handling is updated to indicate that the cash handling is finished (S38), and completes the dispensing transaction.

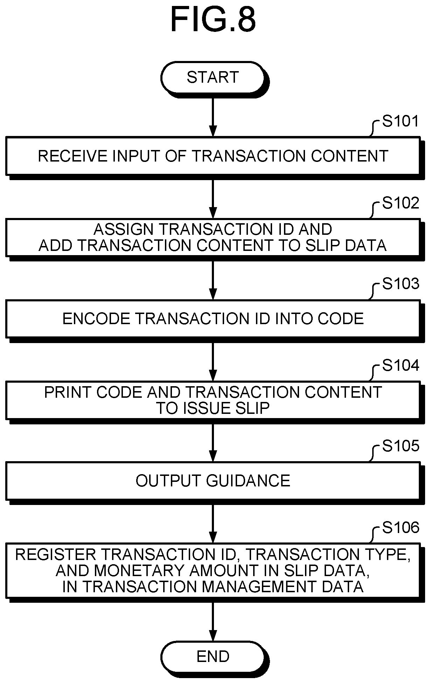

Next, a procedure of handling performed by each apparatus will be described. FIG. 8 is a flowchart showing a procedure of handling by the slip handling apparatus 20. When the receiving unit 26a of the slip handling apparatus 20 receives input of a transaction content (step S101), the receiving unit 26a assigns a transaction ID to the inputted transaction content and adds the transaction content and the transaction ID to the slip data 25a such that the transaction content and the transaction ID are associated with each other (step S102).

The slip issuing unit 26b encodes the transaction ID into a code (step S103), and controls the printer 23 to issue a slip on which the code and the transaction content are printed (step S104). The guidance output unit 26c outputs guidance information to guide the user to the next operation to be performed (step S105).

The receiving unit 26a transmits the transaction ID, a transaction type, and a monetary amount to the transaction management apparatus 10, and ends the handling (step S106). The transaction ID, the transaction type, and the monetary amount are registered in the transaction management data 14a.

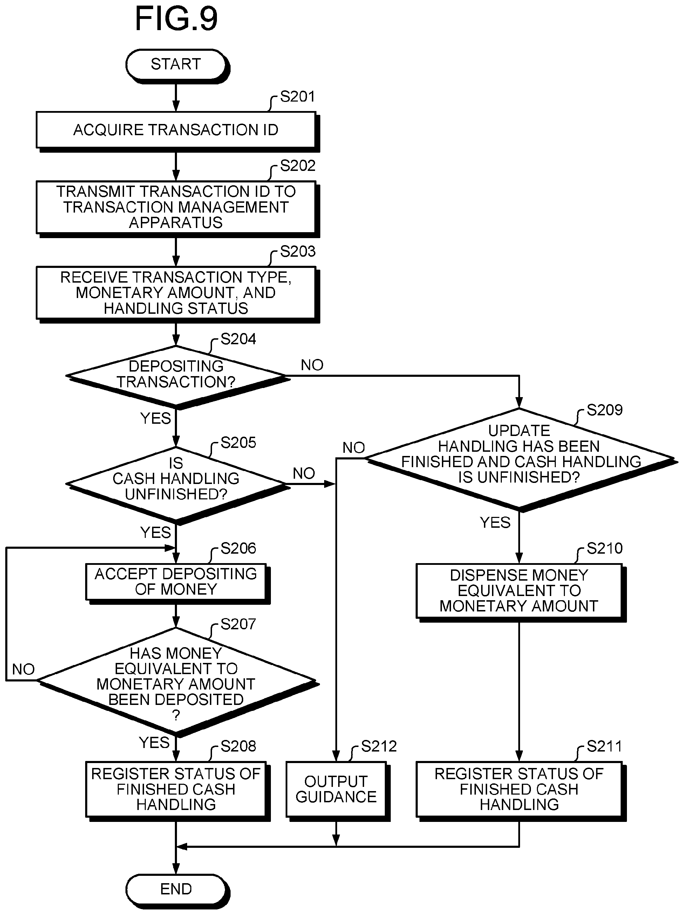

FIG. 9 is a flowchart showing a procedure of handling by the money handling apparatus 30. The slip reading unit 37a of the money handling apparatus 30 acquires the transaction ID from the slip received by the slip receiving unit 32 (step S201). The slip reading unit 37a transmits a reference request including the transaction ID to the transaction management apparatus 10 (step S202), and receives the transaction type, the monetary amount, and the handling status as a response from the transaction management apparatus 10 (step S203).

If the transaction type is "depositing" (step S204; Yes), the determination unit 37b determines whether or not the cash handling is unfinished (step S205). If the cash handling has been finished (step S205; No), the determination unit 37b performs a process for outputting a predetermined guidance (step S212) and ends the handling.

If the cash handling is unfinished (step S205; Yes), the determination unit 37b determines that the operation is appropriate, and the depositing/dispensing unit 37c accepts depositing of money (step S206). If the monetary amount of the deposited money is less than the monetary amount of the transaction (step S207; No), the depositing/dispensing unit 37c proceeds to step S206 and accepts additional depositing of money.

If the monetary amount of the deposited money becomes equal to or more than the monetary amount of the transaction (step S207; Yes), the depositing/dispensing unit 37c transmits a registration request including the transaction ID to the transaction management apparatus 10 for registering data indicating that the cash handling is finished (step S208), and ends the handling. If the deposited money exceeds the monetary amount of the transaction, the excess amount is returned as change.

If the transaction type is not "depositing" but "dispensing" (step S204; No), the determination unit 37b determines whether or not the update handling has been finished and the cash handling is unfinished (step S209). If the update handling is unfinished or the cash handling has been finished (step S209; No), the determination unit 37b performs a process for outputting a predetermined guidance (step S212) and ends the handling.

If the update handling has been finished and the cash handling is unfinished (step S209; Yes), the determination unit 37b determines that the operation is appropriate, and the depositing/dispensing unit 37c dispenses money equivalent to the monetary amount of the transaction (step S210). The depositing/dispensing unit 37c transmits a registration request including the transaction ID to the transaction management apparatus 10 for registering data indicating that the cash handling is finished (step S211) and ends the handling.

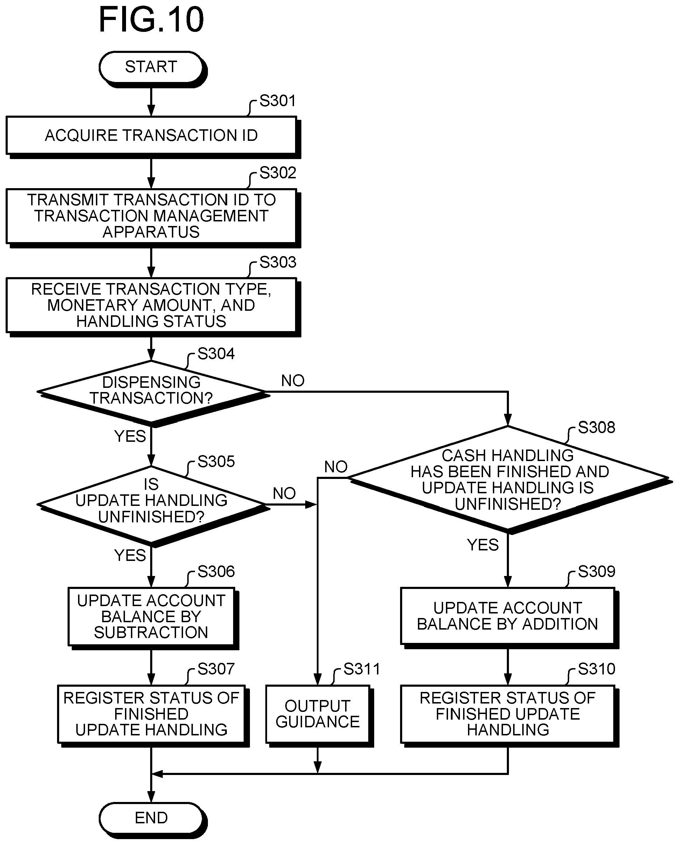

FIG. 10 is a flowchart showing a procedure of handling by the teller terminal apparatus 40. The slip reading unit 45a of the teller terminal apparatus 40 acquires the transaction ID from the slip received by the slip receiving unit 42 (step S301). The slip reading unit 45a transmits a reference request including the transaction ID to the transaction management apparatus 10 (step S302) and receives the transaction type, the monetary amount, and the handling status as a response from the transaction management apparatus 10 (step S303).

If the transaction type is "dispensing" (step S304; Yes), the determination unit 45b determines whether or not the update handling is unfinished (step S305). If the update handling has been finished (step S305; No), the determination unit 45b performs a process for outputting a predetermined guidance (step S311) and ends the handling.

If the update handling is unfinished (step S305; Yes), the determination unit 45b determines that the operation is appropriate. The account handling unit 45c accesses the host computer 50 and subtracts the monetary amount specified by the slip from the balance on the account specified by the slip to update the balance (step S306). The account handling unit 45c transmits a registration request including the transaction ID to the transaction management apparatus 10 for registering data indicating that the update handling is finished (step S307) and ends the handling.

If the transaction type is not "dispensing" but "depositing" (step S304; No), the determination unit 45b determines whether or not the cash handling has been finished and the update handling is unfinished (step S308). If the cash handling is unfinished or the update handling has been finished (step S308; No), the determination unit 45b performs a process for outputting a predetermined guidance (step S311) and ends the handling.

If the cash handling has been finished and the update handling is unfinished (step S308; Yes), the determination unit 45b determines that the operation is appropriate. The account handling unit 45c accesses the host computer 50 and adds the monetary amount specified by the slip to the balance on the account specified by the slip to update the balance (step S309). The account handling unit 45c transmits a registration request including the transaction ID to the transaction management apparatus 10 for registering data indicating that the update handling is finished (step S310) and ends the handling.

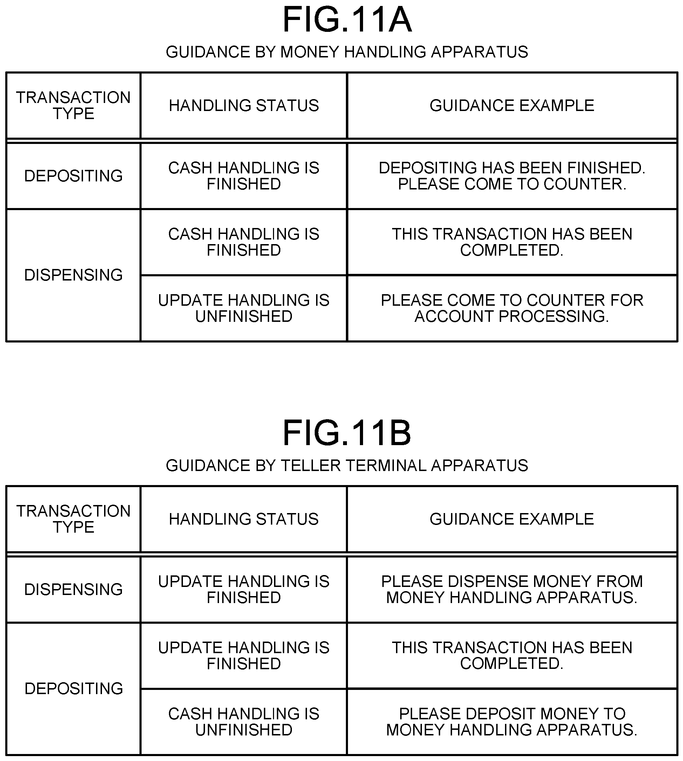

FIGS. 11A and 11B illustrate specific examples of the guidance outputted in the handling shown in FIG. 9 and FIG. 10. As shown in FIG. 11A, in a depositing transaction of the money handling apparatus 30, if the handling status is "cash handling is finished", the money handling apparatus 30 outputs a message such as "Depositing has been finished. Please come to counter".

In a dispensing transaction of the money handling apparatus 30, if the handling status is "cash handling is finished", the money handling apparatus 30 outputs a message such as "This transaction has been completed". In a dispensing transaction, if the handling status is "update handling is unfinished", the money handling apparatus 30 outputs a message such as "Please come to counter for account processing".

As shown in FIG. 11B, in a dispensing transaction of the teller terminal apparatus 40, if the handling status is "update handling is finished", the teller terminal apparatus 40 outputs a message such as "Please dispense money from money handling apparatus".

In a depositing process of the teller terminal apparatus 40, if the handling status is "update handling is finished", the teller terminal apparatus 40 outputs a message such as "This transaction has been completed". In a depositing transaction, if the handling status is "cash handling is unfinished", the teller terminal apparatus 40 outputs a message such as "Please deposit money to money handling apparatus".

Next, modifications of the system configuration will be described. The above-described example shows the configuration in which the teller terminal apparatus 40 is connected to the account management network and the branch network, while the transaction management apparatus 10, the slip handling apparatus 20, and the money handling apparatus 30 are connected to the branch network. However, the system configuration can be changed as appropriate.

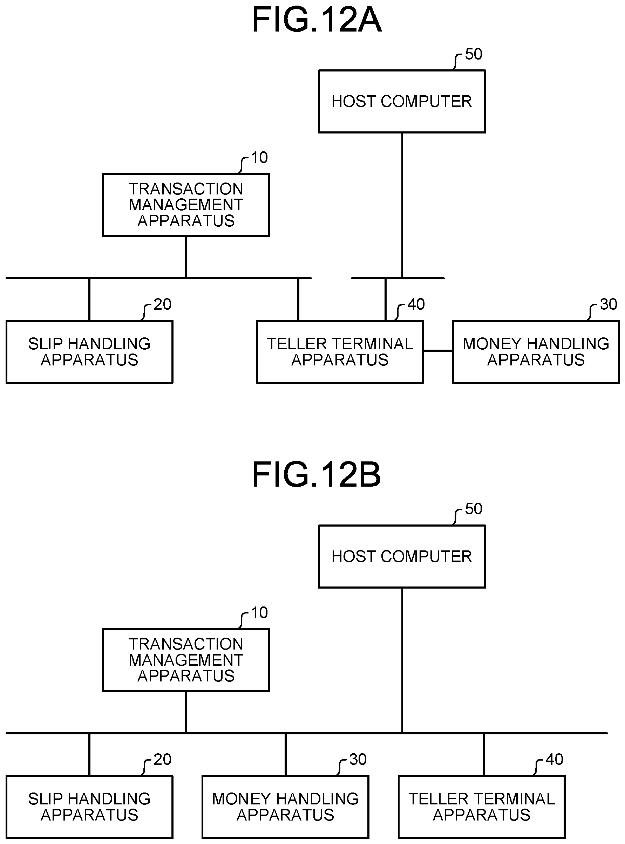

FIGS. 12A and 12B illustrate modifications of the system configuration. In the system configuration shown in FIG. 12A, the teller terminal apparatus 40 is connected to the account management network and the branch network, and the transaction management apparatus 10 and the slip handling apparatus 20 are connected to the branch network. The money handling apparatus 30 is directly connected to the teller terminal apparatus 40. This configuration is used when the money handling apparatus 30 is installed at the teller counter and a clerk at a teller window operates the money handling apparatus 30.

As shown in FIG. 12B, the transaction management apparatus 10, the slip handling apparatus 20, the money handling apparatus 30, and the teller terminal apparatus 40 may be all connected to the account management network.

As described above, in the money handling system according to the present embodiment, the content of a transaction related to money is received at the branch of the financial institution, and the handling status of the transaction is managed. When an operation related to the transaction is performed, it can be determined whether or not the operation is appropriate, by referring to the managed handling status. The handling corresponding to the operation determined to be appropriate can be performed, and the handling status can be updated. Therefore, when a plurality of apparatuses are involved in one transaction desired by the user, it is possible to support an appropriate operation on each apparatus and make the handling smoother.

According to the present embodiment, the slip handling apparatus 20, which generates slip information indicating the content of a transaction, receives the content of the transaction. Each of the slip handling apparatus 20, the money handling apparatus 30 which performs depositing and dispensing of money, and the teller terminal apparatus 40 which updates the balance on an account, determines whether or not an operation is appropriate, performs handling for an appropriate operation, and updates the handling status of the handling.

According to the present embodiment, the slip handling apparatus 20 outputs a slip having slip information printed thereon. The money handling apparatus 30 and the teller terminal apparatus 40 acquire the slip information printed on the slip.

According to the present embodiment, the slip handling apparatus 20 registers a transaction type and a monetary amount in the content of the received transaction, in the transaction management apparatus 10. The transaction management apparatus 10 associates the transaction type and the monetary amount with each other and manages whether or not the cash handling has been performed and whether or not the update handling of the balance on the account has been performed.

According to the present embodiment, the money handling apparatus 30 and the teller terminal apparatus 40 determine whether or not the order of the cash handling and the update handling is appropriate, based on the transaction type.

According to the present embodiment, when the transaction type is a depositing transaction, if the cash handling is unfinished, the money handling apparatus 30 determines that the cash handling for depositing money equivalent to the specified monetary amount is appropriate. If the cash handling has been finished and the update handling is unfinished, the teller terminal apparatus 40 determines that the update handling for adding monetary amount to the balance on the account is appropriate.

According to the present embodiment, when the transaction type is a dispensing transaction, if the update handling is unfinished, the teller terminal apparatus 40 determines that the update handling for subtracting monetary amount from the balance on the account is appropriate. If the update handling has been finished and the cash handling is unfinished, the money handling apparatus 30 determines that the cash handling for dispensing money equivalent to the specified monetary amount is appropriate.

The present embodiment shows an example of the configuration including the transaction management apparatus 10 that manages the handling statuses for transactions. However, the configuration is not limited thereto, and another apparatus such as the slip handling apparatus 20, the money handling apparatus 30, and the teller terminal apparatus 40 may manage the handling statuses for transactions.

In the present embodiment, for the sake of simplicity, depositing transactions and dispensing transactions have been described as examples. However, the present invention can be applied to any transaction such as payment of tax and public money, payment of utility charges, and remittance from an account to another account.

For example, the reception apparatus may be a check handling apparatus that receives a transaction related to a check brought by a user. In this case, the check handling apparatus is provided with the receiving unit 26a. In addition, the check handling apparatus may include a reading device that reads information on the check brought by the user. The reading device reads a monetary amount and magnetic ink characters printed on the check. The read information is used as information required for the transaction. The reading device may also read an image of the check. The information and the image read by the reading device may be printed on a slip as check information. The check handling apparatus may output the check information including the read information and the image, as electronic data. The outputted check information is used for digitizing the check. Moreover, the check handling apparatus may receive depositing of the value of the monetary amount of the check to an account. Moreover, the check handling apparatus may receive dispensing of money equal to or less than the monetary amount of the check. Moreover, the check handling apparatus may receive both depositing of a part of the value of the monetary amount of the check to an account and dispensing of money equivalent to the remaining monetary amount. The check handling apparatus registers data related to the received handling and the monetary amount in the transaction management data 14a in the transaction management apparatus 10. Each of the money handling apparatus 30 and the teller terminal apparatus 40 acquires the check information outputted from the check handling apparatus, refers to the transaction management data 14a in the transaction management apparatus 10, and performs handling as described above.

It is also possible to connect the slip handling apparatus 20 to the system as a peripheral apparatus of the teller terminal apparatus 40. The money handling apparatus 30 is not limited to an apparatus capable of depositing and dispensing money, and may be an apparatus that performs only depositing of money or an apparatus that performs only dispensing of money. The money handling apparatus 30 may be a money changer, or a money handling apparatus used in a backroom of the branch. A plurality of any money handling apparatuses may be connected to each other to carry out the present invention.

The present embodiment shows an example of the configuration in which a transaction ID is read by using a code. However, a transaction ID can be acquired by any method. For example, the visually readable transaction ID may be printed on a slip and the transaction ID may be acquired through character recognition of the slip or an operation of inputting the transaction ID by the operator.

The components described in the present embodiment are conceptually functional constituent elements, and thus may not necessarily be configured as physical constituent elements, as illustrated in the drawings. That is, distributed or integrated forms of each device are not limited to the forms illustrated in the drawings, and all or some of the forms may be distributed or integrated functionally or physically in any unit depending on various loads, use statuses, or the like.

### INDUSTRIAL APPLICABILITY

The transaction processing system and the transaction processing method of the present invention are useful for making a transaction related to money smoother at a branch of a financial institution.

### DESCRIPTION OF THE REFERENCE CHARACTERS

10 Transaction management apparatus
11 Display unit
12 Input unit
13, 24, 33, 43 Communication unit
14, 25, 36, 44 Memory
14a Transaction management data
15, 26, 37, 45 Control unit
15a Transaction registration unit
15b Handling status update unit
20 Slip handling apparatus
21, 31, 41 Display operation unit
22 Card reader
23 Printer
25a Slip data
26a Receiving unit
26b Slip issuing unit
26c Guidance output unit
30 Money handling apparatus
32, 42 Slip receiving unit
34 Coin storage unit
35 Banknote storage unit
36a Inventory amount data
36b, 44a Handling history data
37a, 45a Slip reading unit
37b, 45b Determination unit
37c Depositing/dispensing unit
40 Teller terminal apparatus
45c Account handling unit
50 Host computer

## Claims

1. A transaction processing system for performing a transaction in a branch of a financial institution, the transaction processing system comprising:
a reception apparatus configured to receive a content of the transaction;
a management unit configured to manage the content and a handling status of the transaction received by the reception apparatus;
a determination unit configured to, when an operation related to the received transaction is performed, refer to the handling status managed by the management unit and determine appropriateness of the operation; and
a handling unit configured to perform handling corresponding to the operation determined to be appropriate by the determination unit, and update the handling status.

2. The transaction processing system according to claim 1, wherein
the determination unit and the handling unit are provided in each of a money handling apparatus configured to perform at least one of depositing of money and dispensing of money and a terminal apparatus configured to update a balance on an account, and
the management unit is provided in a management apparatus accessible from the reception apparatus, the money handling apparatus, and the terminal apparatus.

3. The transaction processing system according to claim 2, wherein
the reception apparatus is a slip handling apparatus configured to generate slip information indicating the content of the transaction,
the slip handling apparatus outputs a slip having the slip information printed thereon, and
the money handling apparatus and the terminal apparatus acquire the slip information printed on the slip.

4. The transaction processing system according to claim 2, wherein
the reception apparatus is a check handling apparatus configured to read information on a check and generate check information indicating the content of the transaction related to the check,
the check handling apparatus outputs the check information, and
the money handling apparatus and the terminal apparatus acquire the check information.

5. The transaction processing system according to any one of claims 1 to 4, wherein
the reception apparatus registers a transaction type and a monetary amount in the content of the received transaction, in the management unit, and
the management unit associates the transaction type and the monetary amount with each other and manages whether or not cash handling has been performed and whether or not update handling of a balance on an account has been performed.

6. The transaction processing system according to claim 5, wherein the determination unit determines whether or not an order of the cash handling and the update handling is appropriate, based on the transaction type.

7. The transaction processing system according to claim 6, wherein, when the transaction type is a depositing transaction, if the cash handling is unfinished, the determination unit determines that cash handling of depositing of money equivalent to the monetary amount is appropriate, and if the cash handling has been finished and the update handling is unfinished, the determination unit determines that update handling of addition to the balance on the account is appropriate.

8. The transaction processing system according to claim 5 or 6, wherein, when the transaction type is a dispensing transaction, if the update handling is unfinished, the determination unit determines that update handling of subtraction from the balance on the account is appropriate, and if the update handling has been finished and the cash handling is unfinished, the determination unit determines that cash handling of dispensing of money equivalent to the monetary amount is appropriate.

9. A transaction processing method for performing a transaction in a branch of a financial institution, the transaction processing method comprising:
receiving a content of the transaction;
managing the content and a handling status of the transaction received in the receiving;
determining, when an operation related to the received transaction is performed, appropriateness of the operation by referring to the handling status managed in the managing; and
performing handling corresponding to the operation determined to be appropriate in the determining, and update the handling status.
